# EUROPÄISCHE PATENTSCHRIFT

(11) **EP 4 059 660 B1**
(45) Veröffentlichungstag und Bekanntmachung des Hinweises auf die Patenterteilung: **17.04.2024**
(21) Anmeldenummer: 22162927.2
(22) Anmeldetag: 18.03.2022
(51) Int. Cl.: B24B 3/40, B24B 3/58, B23D 63/12

(54) **VERFAHREN ZUM SCHLEIFEN VON SÄGEZÄHNEN EINES SÄGEBLATTS**
METHOD FOR GRINDING SAW TEETH OF A SAW BLADE
PROCÉDÉ D'AFFUTAGE DES DENTS DE SCIE D'UNE LAME DE SCIE

(30) Priorität: 18.03.2021 CH 2872021
(43) Veröffentlichungstag der Anmeldung: 21.09.2022
(73) Patentinhaber: Iseli + Co. AG, Maschinenfabrik, 6247 Schötz (CH)
(72) Erfinder: Frei, Hanspeter, 6022 Grosswangen (CH)
(74) Vertreter: Keller Schneider Patent- und Markenanwälte AG (Zürich)

(56) Entgegenhaltungen:
- DE-U1- 9 321 251
- US-A- 5 048 236

## Beschreibung

### Technisches Gebiet

Die Erfindung betrifft ein Verfahren zum Schleifen eines Sägeblatts mit einem Sägezahnprofil, das einen Hinterschnitt mit einem Spanwinkel aufweist, sowie eine Zahnteilung hat, die sich im Sägezahnprofil jeweils wiederholt und eine Sägeblattebene bildet, unter Verwendung einer Schleifscheibe mit einer Scheibenachse, einer zur Scheibenachse normal stehenden Scheibenebene und einer Schleifkontur, welche den radial äussersten Rand der Schleifscheibe bildet.

### Stand der Technik

Sägeblätter von Bandsägen, Kreissägen oder Gattersägen müssen regelmässig nachgeschliffen werden. Bei falscher Pflege können sie reissen, da insbesondere Bandsägen einem permanenten Biegewechsel unterworfen und. Dadurch können sich im Zahngrund, dem Bereich der höchsten Zugspannungsbelastung, Haarrisse bilden. Wird nicht rechtzeitig nachgeschärft, vergrößern sich diese und führen zum Bruch. Um dem vorzubeugen, müssen die Sägeblätter regelmäßig nachgeschliffen werden, selbst wenn der übliche Abstumpfungsgrad stellenweise noch nicht erreicht ist. Durch regelmässiges Profilschleifen kann ein frühzeitiges Reissen der Bandsäge verhindert werden.

Wird der Profilschliff jedoch unfachmännisch ausgeführt, entstehen problematische Riefen und Kerben. Zudem härtet übermässige Spanabnahme den Zahngrund auf.

Manchmal sind die Sägezahnprofile der verschiedenen Sägeblätter bekannt, manchmal auch nicht. Dann werden sie in der Regeln nachgemessen und elektronisch in eine entsprechende Maschine eingelesen, zum Nachschleifen. Es hat sich aber herausgestellt, dass das Resultat beim Nachschleifen mit dieser Methode oft nicht den Anforderungen genügt.

Die DE 93 21 251 U1 zeigt eine Vorrichtung zum Schärfen eines Kreissägeblattes mittels einer rotierenden Schleifscheibe, bei der die Randkontur mit einem abtastenden Sensor ermittelt wird.

### Darstellung der Erfindung

Es ist die Aufgabe der vorliegenden Erfindung, ein Verfahren zum Schleifen eines Sägeblattes anzugeben, bei dem das Resultat verbessert werden kann. Das Sägezahnprofil soll überall möglichst gleichmässig tief geschliffen werden.

Die Aufgabe wird durch ein eingangs beschriebenes Verfahren mit den im ersten Patentanspruch genannten Merkmalen gelöst.

Untersuchungen haben ergeben, dass die grossen Variationen der Schleifresultate von den Schleifscheiben herrühren, da diese jeweils unterschiedlich abgenutzt sind. Es wurde daher eine Methode entwickelt, die ein Schleifverfahren zuverlässig gleichmässig ausführen kann, unabhängig vom Verschleissgrad der jeweils verwendeten Schleifscheibe.

Das eingangs beschriebenes Verfahren wird erfindungsgemäss mit den folgenden Schritten gelöst:
- Abtasten oder Abfahren des Sägezahnprofils einschliesslich des Hinterschnittes im Bereich von mindestens einer Zahnteilung mit einer beliebig abgenutzten Schleifscheibe, indem die Scheibenebene im Spanwinkel geneigt ist und sich relativ zum Sägeblatt, während die Scheibenachse in der Sägeblattebene bleibt, wobei die Schleifkontur der Schleifscheibe punktweise oder kontinuierlich die ganze Länge das Sägezahnprofils einer Zahnteilung abfährt und diese dabei an Kontaktstellen berührt, die sich jeweils an verschiedenen Stellen entlang der Schleifkontur befinden;
- Aufnehmen und Abspeichern eines Abtastprofils, das alle Positionen eines virtuellen, stillstehenden Punktes auf der Schleifscheibe, beispielsweise ein Scheibenrandpunkt, beim Berühren an den Kontaktstellen relativ zum Sägezahnprofil beinhaltet, und zusammen mit der aktuellen Schleifkontur eine eindeutig definierte Korrelation zum Sägezahnprofil aufweist;
- Schleifen des Sägeblatts mit derselben Schleifscheibe im rotierenden Zustand in allen Zahnteilungen, indem diese entlang einem Schleifprofil geführt wird, das um eine vorbestimmte Schleiftiefe vom Abtastprofil in Richtung des Spanwinkels versetzt ist.

Diese Methode hat sich als sehr einfach und zuverlässig erwiesen. Selbst wenn die Sägezahnprofile bekannt sind, entsprechend diese lediglich dem Profil im Neuzustand. Nach mehrmaligen Nachschleifen kann sich das Profil bereits derart verändert haben, dass einige Stellen gar nicht, andere dafür übermässig tief abgeschliffen werden. Zudem sind die Konturen der Schleifscheiben auch sehr unterschiedlich, was die Ungenauigkeit der ausgeführten Arbeit erneut erhöht. Das vorliegende Verfahren wird ohne Kenntnis des Sägezahnprofils durchgeführt; es wird auch nicht direkt ermittelt.

Durch die Abtastung des Profils unter Verwendung der Schleifscheibe als Messmittel zum Abtasten sind die Fehler, die sonst vom Abnutzungsgrad der Schleifscheibe herrühren, kompensiert und das Nachschleifen kann im definierten Umfang gewährleistet werden. Zudem ist der Aufwand zum Bestimmen des Schleifprofils sehr gering und kann für alle Sägeprofile angewandt werden, unabhängig davon, ob die Profile bekannt sind und unabhängig vom Alter des Sägeblatt und/oder der Schleifscheibe.

Vorteilhafte Ausführungen sind in den Unteransprüchen beschrieben.

### Kurze Beschreiung der Zeichnungen

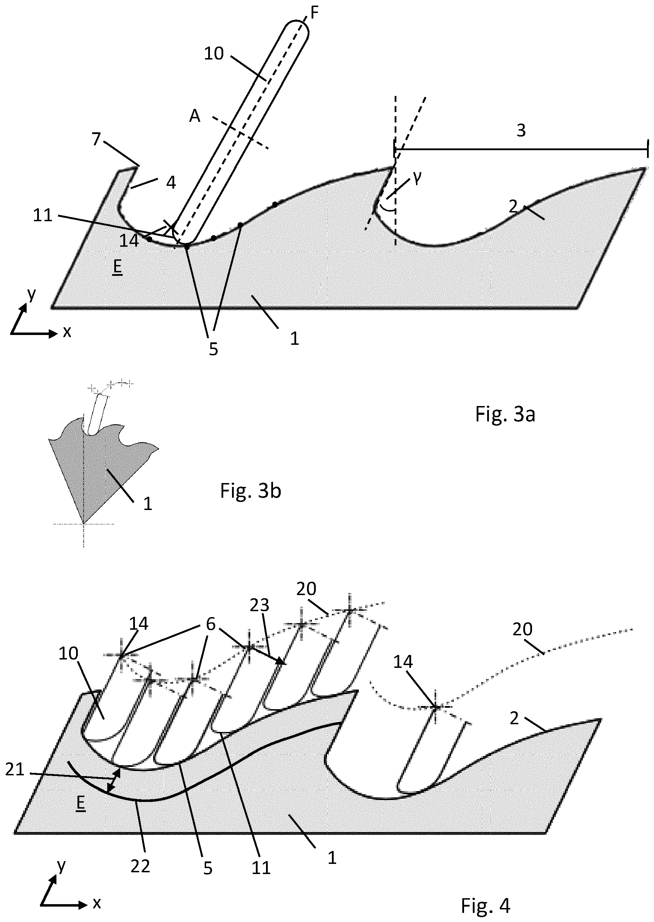

In der Folge wird die Erfindung anhand der Zeichnungen genauer beschrieben. Gleiche Bezugszeichen beziehen sich jeweils auf denselben Sachverhalt. Es zeigen:

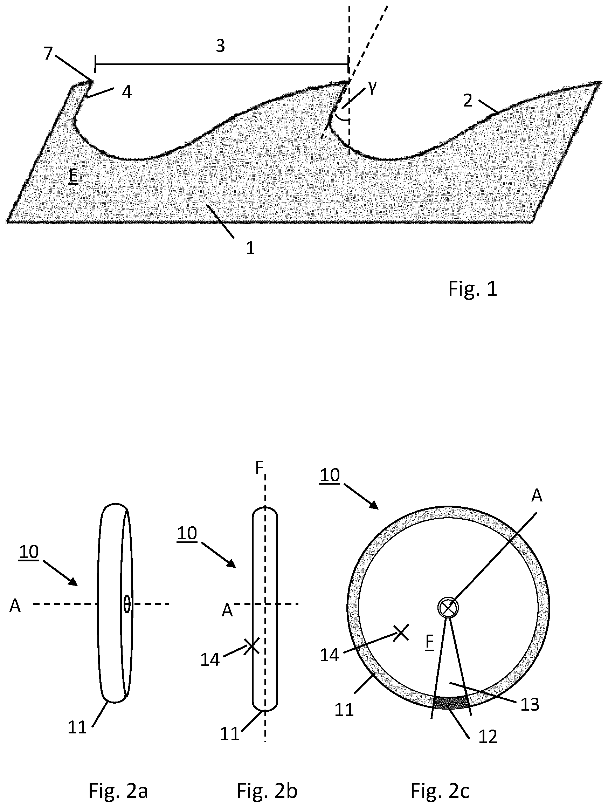

Fig. 1 eine Ansicht eines Sägezahnprofils,
Fig. 2
   a) eine perspektivische Ansicht einer Schleifscheibe;
   b) eine Seitenansicht einer Schleifscheibe;
   c) eine Frontalansicht einer Schleifscheibe
Fig. 3
   a) eine Ansicht eines Sägezahnprofils beim Aufnehmen des Abtastprofils durch die Schleifscheibe;
   b) eine Ansicht wie 3a, mit einem Bandsägeblatt
Fig. 4 eine Ansicht eines Sägezahnprofils mit dem Abtastprofil und dem Schleifprofil (links), und dem geschliffenen Profil (rechts) je einer Zahnteilung.

### Wege zur Ausführung der Erfindung

Fig. 1 zeigt ein Sägezahnprofil 2 eines Sägeblattes 1 mit einer Zahnteilung 3 und einem Hinterschnitt 4 unterhalb der Zahnspitzen 7, die in einem Winkel γ zur Senkrechten geneigt sind. Das Sägezahnprofil 2 wiederholt sich periodisch in den Abständen der Zahnteilung 3, welche jeweils die ersten Zahnspitzen 7 einer Periode eines Sägezahnprofils 2 verbinden. Eine Zahnteilung 3 kann auch weitere, in der Regel kleinere Zahnspitzen 7 umfassen. Das Sägeblatt 1 definiert eine Sägeblattebene E, in der jeweils das Segment des Sägeblatts 1 liegt, das aktuell abzutasten oder zu bearbeiten ist. Das Sägeblatt 1 kann das einer Bandsäge, einer Kreissäge oder einer Gattersäge sein. Bandsägen sind beschlossene Bänder, die zum Schleifen aber segmentweise in eine Ebene E gespannt werden. Bei Sägeblättern 1 von Band- und Gattersägen sind ebenso Sägeblattebenen E definiert.

Die Figuren 2a, 2b und 2c zeigen eine Schleifscheibe 10 in verschiedenen Ansichten. Sie ist durch eine Achse A definiert, um die sie sich beim Schleifen dreht, durch eine dazu senkrecht verlaufende Scheibenebene F, sowie durch den radial äussersten Rand der Schleifscheibe 20, der die Schleifkontur 11 bildet. Sie umfasst zudem einen virtuellen Referenzpunkt 14, der an jeder beliebigen Stelle der Scheibe sein kann und unabhängig von einer Rotation fest steht. Für ein einfaches Verständnis wird er hier beispielsweise an einen Scheibenrandpunkt gelegt, ein anderes Beispiel wäre der Achsenmittelpunkt.

Fig. 3a zeigt den Ausschnitt eines Sägeblatts 1 gemäss Fig. 1, wieder über zwei Zahnteilungen 3, wobei die Koordinaten x, y angegeben sind. Die x-Achse verläuft parallel zur Zahnteilung 3, während die y-Achse im Winkel γ von der Senkrechten zur x-Achse geneigt ist, sodass der oberste Teil des Hinterschnittes 4, anschliessend an die Zahnspitze 7, parallel zur y-Achse verläuft.

Fig. 3b zeigt eine solche schematische Ansicht für ein Kreissägeblatt über drei Zahnteilungen 3.

Die Schleifscheibe 10 ist mit ihrer Schleifkontur 11 auf dem Sägezahnprofil 2 aufgesetzt, wobei die Scheibenebene F im Spanwinkel γ geneigt ist; ihre Scheibenebene F liegt demnach in der y-Achse, während ihre Scheibenachse A in der Sägeblattebene E liegt. Dieser Sachverhalt bleibt während dem gesamten Verfahren so, ausser im Fall eines Kreissägeblattes. dort kann sich die Lage der Scheibenebene F ändern, wenn das Sägeblatt gedreht wird.

Die Schleifscheibe 10 kann sich relativ zum Sägeblatt 1 entlang der y-Achse verschieben und sich so dem Sägeblatt 1 nähern oder entfernen. Dabei bleibt die Scheibenachse A in der Sägeblattebene E. Zudem kann sich die Schleifscheibe 10 entlang der x-Achse, resp. in der Richtung der Zahnteilung 3, relativ zum Sägeblatt 1 bewegen, womit sie das Sägezahnprofil 2 schliesslich abfahren resp. schleifen kann. Für die zweite Relativbewegung kann entweder das Sägeblatt 1 oder die Schleifscheibe 10 bewegt werden. Im Fall eines Kreissägeblatts 1 ist die zweite Relativbewegung eine Rotation um die Drehachse des Kreissägeblatts 1, wobei dazu entweder die Schleifscheibe 10 oder das Kreissägeblatt 1 bewegt wird.

Mit diesen Relativbewegungen kann schliesslich das Sägezahnprofil 2 durch die Schleifscheibe 10 abgetastet werden, einschliesslich des Hinterschnittes 4, wie in Fig. 4 dargestellt ist. Dies wird im Bereich von mindestens einer Zahnteilung 3 mit einer beliebig abgenutzten Schleifscheibe 10 durchgeführt. Dabei fährt die Schleifscheibe 10 punktweise Kontaktpunkte 5 ab oder fährt kontinuierlich die ganze Länge das Sägezahnprofils 2 innerhalb einer Zahnteilung 3 ab. Das Sägezahnprofil 2 berührt dabei das Sägezahnprofil 2 an verschiedenen Stellen entlang ihrer Schleifkontur 11 an Kontaktstellen 5.

Bei einer schrittweisen Abtastung wird die Schleifscheibe 10 dem Sägeblatt 1 entlang der y-Achse bis zur Berührung genähert und anschliessend wieder entfernt, wobei die Schleifscheibe 10 zum Erfassen des nächsten Abtastpunktes 6 an der nächsten Kontaktstelle 5 relativ zum Sägeblatt 1 um einen Versatz 23 in x-Richtung, also in Richtung der Zahnteilung 3, verschoben wird. Dieser Versatz 23 unterscheidet sich von den Abständen zwischen zwei Kontaktstellen 5, die in der Regel jeweils ungleich voneinander entfernt sind.

Dabei wird ein Abtastprofil 20 aufgenommen und abgespeichert, wie links in Fig. 4 dargestellt. Bei einer punktweisen Abtastung können die erfassten Abtastpunkte 6 zu einem vollständigen Abtastprofil 20 interpoliert werden. Dieses Abtastprofil 20 umfasst alle Positionen, die ein virtueller, stillstehender Referenzpunkt 14 auf der Schleifscheibe 1, zu den Zeitpunkten es Berührens, an den Kontaktstellen 5 relativ zum Sägezahnprofil 2 einnimmt. Hier wird dieser Referenzpunkt 14 beispielsweise an einen Scheibenrandpunkt gelegt. Dieses Abtastprofil 20 weist zusammen mit der aktuellen Schleifkontur 11 eine eindeutig definierte Korrelation zum Sägezahnprofil 2 auf.

Schliesslich wird das Sägeblatt 1 mit derselben Schleifscheibe 10 im rotierenden Zustand geschliffen. Dazu wird dieses entlang einem Schleifprofil 22 geführt, das um eine vorbestimmte Schleiftiefe 21 vom Abtastprofil 20 in y-Richtung, d.h. in Richtung des Spanwinkels γ, versetzt ist. Auf der rechten Seite in Fig. 4 ist das Sägeblatt 1 in geschliffenem Zustand dargestellt, mit der Schleiftiefe 21 wie auf der linken Seite dargestellt. Diese Schleiftiefe 21 ist hier überproportional gross dargestellt.

In einem bevorzugten Verfahren rotiert die Schleifscheibe 10 beim Abtasten. Der Kontakt zwischen der Schleifscheibe 10 und dem Sägeblatt 1 kann auf verschiedene Arten ermittelt werden, insbesondere akustisch, optisch, durch Funkenerkennung, auf Grund einer Kraftmessung, oder durch Dehnungen und Stauchungen, die mittels Dehnmessstreifen erfasst werden.

Bei einer akustischen Ermittlung wird der Ton erfasst, der beim Berühren der rotierenden Schleifscheibe 10 am Sägeblatt 1 entsteht und leicht erfasst werden kann. Wenn die Schleifscheibe 10 nicht rotiert, kann das Sägeblatt 1 durch einen Aktuator in Schwingung versetzt werden, wodurch ein Ton erzeugt wird. Dieser verändert sich, sobald das Sägeblatt 1 durch die nicht rotierende Schleifscheibe 10 berührt wird, was ebenfalls akustisch erfasst werden kann. Auch geeignet sind Kraftmessungen, welche bei einer Berührung zwischen der Schleifscheibe 10 und dem Sägeblatt 1 auftreten, wenn die Schleifscheibe 10 entlang der y-Achse gegen das Sägeblatt 1 gefahren wird. Solche indirekten Messungen können auch mittels Dehnmessstreifen durchgeführt werden, welche Dehnungen und Stauchungen erfassen, die bei einer Krafteinwirkung zwischen der Schleifscheibe 10 und dem Sägeblatt 1 auf einer tragenden Struktur entstehen. Ein Rotieren der Schleifscheibe 10 ist auch dazu nicht notwendig.

Alternativ dazu kann vor dem Beginn des Abtastens in einem Winkelsegment 13 der Schleifscheibe 10 der Schleifbereich 11 mit einer elektrisch leitenden Schicht 12 versehen sein, wie in Fig. 2c dargestellt ist. Dadurch kann der Kontakt zwischen der Schleifscheibe 10 und dem Sägeblatt 1 elektrisch erfasst werden. Bei diesem Abtasten rotiert die Schleifscheibe 10 nicht.

Generell kann das Abtastprofil 20 kontinuierlich entlang des Sägezahnprofils 2 erfasst werden oder punktuell, und anschliessend durch Interpolation zu einer stetigen Kurve ergänzt werden. Dabei kann die Schleifscheibe 10 beim Abtasten des Sägezahnprofils 2 jeweils rotieren, oder stillstehen.

Bei einem ersten bevorzugten Verfahren wird beim Abtasten und/oder Schleifen die Schleifscheibe 10 nur entlang der y-Achse, die entlang des Spanwinkels γ verläuft, translatorisch verschoben, wobei sich das Sägeblatt 1 entweder entlang der x-Achse, die parallel zur Zahnteilung 3 verläuft, translatorisch oder, wenn das Sägeblatt 1 das einer Kreissäge ist, um die Drehachse des Kreissägeblatts rotierend bewegt.

Alternativ dazu wird die Schleifscheibe 10 beim Abtasten und/oder Schleifen entlang der y- Achse und zudem entlang der x-Achse translatorisch oder rotierend um die Drehachse des Kreissägeblatts verschoben. Das Sägeblatt 1 steht dabei im Raum fest und wird nicht bewegt.

In einem bevorzugten Verfahren wird beim Schleifen die Drehzahl ermittelt, mit der die Schleifscheibe 10 rotiert. Entsprechend wird die Geschwindigkeit der Relativbewegungen in x-Richtung, oder ggf. rotierend um die Drehachse des Kreissägeblatts, zwischen dem Sägeblatt 1 und der Schleifscheibe 10 beim Schleifen in Abhängigkeit dieser Drehzahl angepasst. Je niedriger die Drehzahl, um so langsamer wird gefahren.

Das Sägeblatt 1 kann das einer Bandsäge, einer Kreissäge oder einer Gattersäge sein. Es kann zum Schneiden von Holz, Metall, Kunststoff, Stein, Knochen und/oder von Lebensmitteln geeignet sein.

### Bezugszeichenliste

- 1: Sägeblatt
- 2: Sägezahnprofil
- 3: Zahnteilung eines Profils
- 4: Hinterschnitt
- 5: Kontaktstelle, Linie oder Punkte
- 6: Abtastpunkt
- 7: Zahnspitze
- γ: Spanwinkel
- E: Sägeblattebene

- 10: Schleifscheibe
- 11: Schleifkontur
- 12: Elektrisch leitende Schicht
- 13: Winkelsegment der Schleifscheibe
- 14: Referenzpunkt, virtuell
- A: Scheibenachse
- F: Scheibenebene

- 20: Abtastprofil
- 21: Schleiftiefe
- 22: Schleifprofil
- 23: Versatz

- y: Näherungsrichtung, Bewegungsrichtung
- x: Translatorische Bewegungsrichtung

## Patentansprüche

1. Verfahren zum Schleifen eines Sägeblatts (1) mit einem Sägezahnprofil (2), das einen Hinterschnitt (4) mit einem Spanwinkel (γ) aufweist sowie eine Zahnteilung (3) hat, die sich im Sägezahnprofil (2) jeweils wiederholt und in einer Sägeblattebene (E) liegt, unter Verwendung einer Schleifscheibe (10) mit einer Scheibenachse (A), einer zur Scheibenachse (A) normal stehenden Scheibenebene (F) und einer Schleifkontur (11),welche den radial äussersten Rand der Schleifscheibe (20) bildet, wobei das Verfahren die folgenden Schritte aufweist:
- Abtasten oder Abfahren des Sägezahnprofils (2) einschliesslich des Hinterschnittes (4) im Bereich von mindestens einer Zahnteilung (3) mit der Schleifscheibe (10) in beliebig abgenutztem Zustand, indem die Scheibenebene (F) im Spanwinkel (γ) geneigt ist und sie sich relativ zum Sägeblatt (1) bewegt, während die Scheibenachse (A) in der Sägeblattebene (E) bleibt, wobei die Schleifscheibe (10) punktweise oder kontinuierlich die ganze Länge das Sägezahnprofils (2) einer Zahnteilung (3) abfährt und diese dabei an verschiedenen Stellen entlang ihrer Schleifkontur (11) an Kontaktstellen (5) berührt,
- Aufnehmen und Abspeichern eines Abtastprofils (20), das alle Positionen eines virtuellen, stillstehenden Punktes (14) auf der Schleifscheibe (1), beispielsweise ein Scheibenrandpunkt, beim Berühren an den Kontaktstellen (5) relativ zum Sägezahnprofil (2) beinhaltet, und zusammen mit der aktuellen Schleifkontur (11) eine eindeutig definierte Korrelation zum Sägezahnprofil (2) aufweist,
**gekennzeichnet durch**
- Schleifen des Sägeblatts (1) mit derselben Schleifscheibe (10) im rotierenden Zustand in allen Zahnteilungen (3), indem diese entlang eines Schleifprofils (22) geführt wird, das um eine vorbestimmte Schleiftiefe (21) vom Abtastprofil (20) in Richtung des Spanwinkels (γ) versetzt ist.

2. Verfahren nach Anspruch 1, **dadurch gekennzeichnet, dass** die Schleifscheibe (10) beim Abtasten rotiert.

3. Verfahren nach Anspruch 1 oder 2, **dadurch gekennzeichnet, dass** der Kontakt zwischen der Schleifscheibe (10) und dem Sägeblatt (1) akustisch, optisch, durch Funkenerkennung, auf Grund einer Kraftmessung oder mittels Dehnmessstreifen erfassten Dehnungen und Stauchungen erfasst wird.

4. Verfahren nach einem der vorhergehenden Ansprüche, **dadurch gekennzeichnet, dass** das Abtastprofil (20) punktuell als Abtastpunkte (6) erfasst und anschliessend durch Interpolation ergänzt wird.

5. Verfahren nach Anspruch 4, **dadurch gekennzeichnet, dass** die Scheibenebene (F) der Schleifscheibe (10) beim Abtasten jeweils im Spanwinkel (γ) geneigt dem Sägeblatt (1) in dieser Richtung bis zur Berührung genähert und anschliessend wieder entfernt wird, wobei die Schleifscheibe (10) zum Erfassen des nächsten Abtastpunktes (6) relativ zum Sägeblatt (1) um einen Versatz (23) in Richtung der Zahnteilung (3) verschoben wird.

6. Verfahren nach Anspruch 1, **dadurch gekennzeichnet, dass** vor dem Beginn des Abtastens in einem Winkelsegment (13) der Schleifscheibe (10) der Schleifbereich (11) mit einer elektrisch leitenden Schicht (12) versehen wurde und der Kontakt zwischen der Schleifscheibe (10) und dem Sägeblatt (1) elektrisch erfasst wird.

7. Verfahren nach Anspruch 6, **dadurch gekennzeichnet, dass** das Abtastprofil (20) kontinuierlich entlang des Sägezahnprofils (2) einer Zahnteilung (3) erfasst wird.

8. Verfahren nach Anspruch 6 oder 7, **dadurch gekennzeichnet, dass** die Schleifscheibe (10) beim Abtasten des Sägezahnprofils (2) nicht rotiert.

9. Verfahren nach einem der vorhergehenden Ansprüche, **dadurch gekennzeichnet, dass** beim Abtasten und/oder Schleifen die Schleifscheibe (10) nur entlang einer Achse, die entlang des Spanwinkels (γ) verläuft, translatorisch verschoben wird und sich das Sägeblatt (1) entweder entlang einer Achse parallel zur Zahnteilung (3) translatorisch, oder, wenn das Sägeblatt (1) das einer Kreissäge ist, um seine Drehachse rotierend bewegt.

10. Verfahren nach einem der Ansprüche 1 bis 8, **dadurch gekennzeichnet, dass** die Schleifscheibe (10) beim Abtasten und/oder Schleifen entlang einer ersten Achse verschoben wird, die entlang des Spanwinkels (γ) verläuft, und zudem entweder translatorisch entlang einer zweiten Achse, die parallel zur Zahnteilung (3) verläuft, oder rotatorisch um die Drehachse eines Kreissägeblatts verschoben wird, wobei das Sägeblatt (1) im Raum feststeht.

11. Verfahren nach einem der vorhergehenden Ansprüche, **dadurch gekennzeichnet, dass** beim Schleifen die aktuelle Drehzahl der Schleifscheibe (10) ermittelt wird und die Geschwindigkeit der translatorischen Relativbewegungen parallel zur Zahnteilung (3) zwischen dem Sägeblatt (1) und der Schleifscheibe (10) in Abhängigkeit dieser Drehzahl angepasst wird.

12. Verfahren nach einem der vorhergehenden Ansprüche, **dadurch gekennzeichnet, dass** das Sägeblatt (1) das einer Bandsäge, einer Kreissäge oder einer Gattersäge ist.

13. Verfahren nach einem der vorhergehenden Ansprüche, **dadurch gekennzeichnet, dass** das Sägeblatt (1) zum Schneiden von Holz, Metall, Kunststoff, Stein, Knochen und/oder von Lebensmitteln geeignet ist.

## Claims

1. Method for grinding a saw blade (1) with a saw tooth profile (2) which has an undercut (4) with a rake angle (γ) and a tooth pitch (3) which is repeated in the saw tooth profile (2) and lies in a saw blade plane (E), using a grinding wheel (10) with a wheel axis (A), a wheel plane (F) normal to the wheel axis (A) and a grinding contour (11) which forms the radially outermost edge of the grinding wheel (20), the method comprising the following steps:
- Scanning or traversing the saw tooth profile (2) including the undercut (4) in the area of at least one tooth pitch (3) with the grinding wheel (10) in any worn condition, in that the wheel plane (F) is inclined at the rake angle (γ) and it moves relative to the saw blade (1), while the wheel axis (A) remains in the saw blade plane (E), whereby the grinding wheel (10) runs point by point or continuously along the entire length of the saw tooth profile (2) of a tooth pitch (3) and touches it at various points along its grinding contour (11) at contact points (5),
- Recording and storing a scanning profile (20) which contains all positions of a virtual, stationary point (14) on the grinding wheel (1), for example a wheel edge point, when touching at the contact points (5) relative to the saw tooth profile (2), and together with the current grinding contour (11) has a clearly defined correlation to the saw tooth profile (2),
**characterised by**
- Grinding of the saw blade (1) with the same grinding wheel (10) in the rotating state in all tooth pitches (3) by guiding it along a grinding profile (22) which is offset by a predetermined grinding depth (21) from the scanning profile (20) in the direction of the rake angle (γ).

2. Method according to claim 1, **characterised in that** the grinding wheel (10) rotates during scanning.

3. Method according to claim 1 or 2, **characterised in that** the contact between the grinding wheel (10) and the saw blade (1) is detected acoustically, optically, by spark detection, on the basis of a force measurement or strains and compressions detected by means of strain gauges.

4. Method according to any one of the preceding claims, **characterised in that** the scanning profile (20) is recorded pointwise as scanning points (6) and then completed by interpolation.

5. Method according to claim 4, **characterised in that** the wheel plane (F) of the grinding wheel (10) during scanning, respectively inclined at the rake angle (γ), is brought closer to the saw blade (1) in this direction until contact is made and is then removed again, wherein the grinding wheel (10) is displaced by an offset (23) relative to the saw blade (1) in the direction of the tooth pitch (3) in order to detect the next scanning point (6).

6. Method according to claim 1, **characterised in that** before the start of scanning in an angled segment (13) of the grinding wheel (10), the grinding region (11) was provided with an electrically conductive layer (12) and the contact between the grinding wheel (10) and the saw blade (1) is detected electrically.

7. Method according to claim 6, **characterised in that** the scanning profile (20) is continuously captured along the saw tooth profile (2) of a tooth pitch (3).

8. Method according to claim 6 or 7, **characterised in that** the grinding wheel (10) does not rotate when scanning the saw tooth profile (2).

9. Method according to any one of the preceding claims, **characterised in that** during scanning and/or grinding the grinding wheel (10) is displaced translationally only along an axis which runs along the rake angle (γ) and the saw blade (1) moves either translationally along an axis parallel to the tooth pitch (3) or, if the saw blade (1) is that of a circular saw, rotationally about its axis of rotation.

10. Method according to any one of claims 1 to 8, **characterised in that** the grinding wheel (10) is displaced during scanning and/or grinding along a first axis, which runs along the rake angle (γ), and is also displaced either translationally along a second axis, which runs parallel to the tooth pitch (3), or rotationally about the axis of rotation of a circular saw blade, the saw blade (1) being stationary in space.

11. Method according to any one of the preceding claims, **characterised in that** the current rotational speed of the grinding wheel (10) is determined during grinding and the speed of the translatory relative movements parallel to the tooth pitch (3) between the saw blade (1) and the grinding wheel (10) is adapted as a function of this rotational speed.

12. Method according to any one of the preceding claims, **characterised in that** the saw blade (1) is that of a band saw, a circular saw or a gang saw.

13. Method according to any one of the preceding claims, **characterised in that** the saw blade (1) is suitable for cutting wood, metal, plastic, stone, bone and/or food.

## Revendications

1. Procédé d'affûtage d'une lame de scie (1) avec un profil de dent de scie (2), qui comporte une contre-dépouille (4) avec un angle d'affûtage (γ) et possède un pas de denture (3), qui se répète respectivement dans le profil de dent de scie (2) et se situe dans un plan de lame de scie (E) en utilisant une meule d'affûtage (10) avec un axe de meule (A), un plan de meule (F) situé normalement par rapport à l'axe de meule (A) et un profil d'affûtage (11), lequel forme le bord radialement le plus extérieur de la meule d'affûtage (20), sachant que le procédé comporte les étapes suivantes :
- détection ou parcours du profil de dent de scie (2) y compris de la contre-dépouille (4) dans la zone d'au moins un pas de denture (3) avec la meule d'affûtage (10) dans un état d'usure quelconque, le plan de meule (F) étant incliné dans l'angle d'affûtage (**γ**) et se déplaçant par rapport à la lame de scie (1), alors que l'axe de meule (A) reste dans le plan de la lame de scie (E), sachant que la meule d'affûtage (10) parcourt de façon ponctuelle ou continue toute la longueur du profil de dent de scie (2) d'un pas de denture (3) et celle-ci vient toucher à cet effet aux points de contact (5) à différents endroits le long de son profil d'affûtage (11),
- enregistrement et mémorisation d'un profil de détection (20), qui contient toutes les positions d'un point virtuel, fixe (14) sur la meule d'affûtage (1), par exemple un point de bord de meule, lors du contact aux points de contact (5) par rapport au profil de dent de scie (2) et comporte avec le profil d'affûtage réel (11) une corrélation clairement définie par rapport au profil de dent de scie (2),
**caractérisées par**
- l'affûtage de la lame de scie (1) avec la même meule d'affûtage (10) en état de rotation dans tous les pas de denture (3), celle-ci étant guidée le long d'un profil d'affûtage (22), qui est déporté d'une profondeur de passe d'affûtage prédéterminée (21) par rapport au profil de détection (20) en direction de l'angle d'affûtage (γ).

2. Procédé selon la revendication 1, **caractérisé en ce que** la meule d'affûtage (10) est en rotation lors de la détection.

3. Procédé selon la revendication 1 ou 2, **caractérisé en ce que** le contact entre la meule d'affûtage (10) et la lame de scie (1) est saisi de façon acoustique, optique, par identification d'étincelles sur la base d'une mesure de force ou d'extensions et de refoulements saisis au moyen d'extensomètres.

4. Procédé selon l'une quelconque des revendications précédentes, **caractérisé en ce que** le profil de détection (20) est saisi de façon ponctuelle en tant que points de détection (6) et est ensuite complété par interpolation.

5. Procédé selon la revendication 4, **caractérisé en ce que** le plan de meule (F) de la meule d'affûtage (10) respectivement incliné dans un angle d'affûtage (γ) lors de la détection, est approché de la lame de scie (1) dans cette direction jusqu'au contact et est ensuite à nouveau éloignée, sachant que la meule d'affûtage (10) est déplacée d'un déport (23) en direction du pas de la denture (3) pour la saisie du point de détection suivant (6) par rapport à la lame de scie (1).

6. Procédé selon la revendication 1, **caractérisé en ce qu'**avant le début de la détection dans un segment d'angle (13) de la meule d'affûtage (10), la zone d'affûtage (11) a été dotée d'une couche électroconductrice (12) et le contact entre la meule d'affûtage (10) et la lame de scie (1) est saisi de façon électrique.

7. Procédé selon la revendication 6, **caractérisé en ce que** le profil de détection (20) est saisi en continu le long du profil de dent de scie (2) d'un pas de denture (3).

8. Procédé selon la revendication 6 ou 7, **caractérisé en ce que** la meule d'affûtage (10) ne tourne pas lors de la détection du profil de dent de scie (2).

9. Procédé selon l'une quelconque des revendications précédentes, **caractérisé en ce que**
la meule d'affûtage (10), lors de la détection et/ou de l'affûtage, passe seulement le long d'un axe, qui passe le long de l'angle d'affûtage (γ), est déplacée de façon translatoire et la lame de scie (1), se déplace soit le long d'un axe parallèlement au pas de la denture (3), soit en rotation autour de son axe de rotation, lorsque la lame de scie (1) est celle d'une scie circulaire.

10. Procédé selon l'une quelconque des revendications 1 à 8, **caractérisé en ce que** la meule d'affûtage (10) est déplacée lors de la détection et/ou de l'affûtage le long d'un premier axe, qui passe le long de l'angle d'affûtage (γ) et passe en outre soit de façon translatoire le long d'un deuxième axe, qui passe parallèlement au pas de la denture (3), soit est déplacée de façon rotatoire autour de l'axe de rotation d'une lame de scie circulaire, sachant que la lame de scie (1) reste fixe dans l'espace.

11. Procédé selon l'une quelconque des revendications précédentes, **caractérisé en ce que** la vitesse de rotation réelle de la meule d'affûtage (10) est déterminée lors de l'affûtage et la vitesse des mouvements relatifs translatoires parallèlement au pas de denture (3) entre la lame de scie (1) et la meule d'affûtage (10) est adaptée en fonction de cette vitesse de rotation.

12. Procédé selon l'une quelconque des revendications précédentes, **caractérisé en ce que** la lame de scie (1) est celle d'une scie à ruban, d'une scie circulaire ou d'une scie alternative à cadre.

13. Procédé selon l'une quelconque des revendications précédentes, **caractérisé en ce que** la lame de scie (1) est adaptée à la découpe de bois, de métal, de matière plastique, de pierre, d'os et/ou de denrées alimentaires.
